# EUROPEAN PATENT SPECIFICATION

(11) **EP 1 594 585 B1**
(45) Date of publication and mention of the grant of the patent: **23.01.2008**
(21) Application number: 03814586.8
(22) Date of filing: 02.09.2003
(51) Int. Cl.: B01D 35/18, B01D 29/33, B01D 29/86, B01J 8/00, B01J 8/20

(54) **OLEFIN EPOXIDATION PROCESS EMPLOYING AN IN SITU FILTRATION DRAUGHT TUBE REACTOR SYSTEM**
OLEFIN EPOXIDATIONSVERFAHREN MIT EINEM IN SITU-FILTRIERSYSTEM FÜR FALLROHRREAKTOR
PROCEDE D'EPOXIDATION D'OLEFINE UTILISANT UN REACTEUR A TUBE D'ASPIRATION PRESENTANT UN SYSTEME DE FILTRATION INCORPORE

(30) Priority: 30.12.2002 US 331703
(43) Date of publication of application: 16.11.2005
(73) Proprietor: Lyondell Chemical Technology, L.P., Greenville, DE 19807 (US)
(72) Inventor: SAWYER, Gary, A., Media, PA 19063 (US); LIEPA, Mark, A., Exton, PA 19341 (US); BALAN, Prakash, G., Dunn Loring, Virginia 22027 (US)
(74) Representative: Nederlof, Etienne C.
(86) International application number: PCT/US2003/027656
(87) International publication number: WO 2004/060533

(56) References cited:
- EP-A- 0 073 079
- US-A- 4 749 654
- US-A- 4 943 535
- US-A- 5 019 512
- US-B1- 6 376 686
- US-B2- 6 464 384
- PATENT ABSTRACTS OF JAPAN vol. 014, no. 077 (C-0688), 14 February 1990 (1990-02-14) & JP 01 296973 A (NGK INSULATORS LTD), 30 November 1989 (1989-11-30)

## Description

### FIELD OF THE INVENTION

The present invention is directed to an olefin epoxidation process employing a reactor having a configuration especially useful in heterogenous reactions employing a solid catalyst in a liquid phase.

### BACKGROUND ART

The majority of propylene oxide produced today is produced by so-called "coproduct" processes in which an easily oxidizable substrate is oxidized to produce hydroperoxides and/or peroxides, which are then used to "indirectly" oxidize propylene. The reduction products of the oxidized substrate are generated in large quantities and sold as coproducts. Typical coproducts are styrene and methyl t-butyl ether. Since the process necessitates purchase of the oxidizable substrates and sale of coproduct, the price of each of which may vary widely, "direct oxidation" processes have been sought wherein market fluctuations do not dictate the overall economy of the process.

While epoxidation of ethylene with oxygen over a supported silver catalyst has been widely used, an analogous oxidation of propylene is not viable. Recent research activity directed to "direct oxidation" of propylene has concentrated on the use of hydrogen peroxide, generated externally or *in situ,* in the presence of titanium silicate zeolites such as titanium silicalite as catalysts. The solid crystalline catalyst particles may be treated to contain a noble metal such as palladium which catalyzes hydrogen peroxide production from hydrogen and oxygen. If such a process could be commercially practiced, only low cost reactants would be used, and no coproduct produced.

In heterogenous reactions in which a solid catalyst is employed in a liquid medium, some means of separating product-containing liquid from the reactor must be provided. Because the catalyst comprises a solid phase slurried in the liquid, the catalyst must be separated from the product-containing outlet stream by appropriate means. This is conventionally achieved by pumping the product stream through a filter to recover catalyst, either in the form of solids or as a more concentrated catalyst-containing slurry. The catalyst ordinarily represents a high cost component of the overall process, particularly when treated with noble metals.

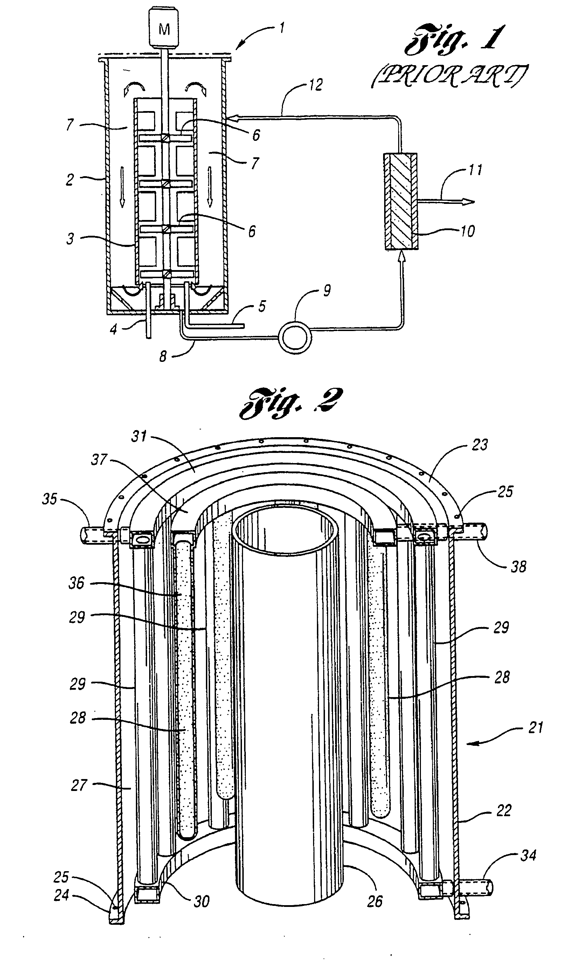

In copending United States Patent No. 6,376,686, an olefin epoxidation process is described employing a solid catalyst in a reactor configuration similar to that disclosed in United States Patent No. 6,464,384. The reactor configuration has been found to exhibit high mass transfer. Use of this reactor as a continuous flow through system would require external catalyst separation and recirculation. This patent teaches a way to achieve filtration *in-situ.* Both patents disclose a "draught tube" reactor, a simplified schematic of which is illustrated by Figure 1. Figure 1 illustrates a prior art draught tube reactor 1 which may be used for a heterogeneous reaction, and contains slurried solid catalyst. Within the reactor shell 2 is draught tube 3 into which relevant feed streams are introduced, here a liquid feed line 4 and vapor (gas) feed line 5. Within the draught tube are impellers 6 driven by motor M which induce upwards flow through draught tube 3 and thorough mixing of the reactant feed streams and catalyst slurry. At the top of draught tube 3, the reaction mixture slurry flows countercurrently through the annular space 7 between draught tube 3 and the reactor wall 2. A portion is recirculated back through the bottom of draught tube 3, while a further portion is taken off at outlet 8 and pumped by circulation pump 9 through filter 10. Filtered product stream 11 is removed and processed to remove product, unreacted starting materials, recycle solvent, etc., while a solid catalyst enriched slurry 12 is returned to the reactor. Catalyst fines generated by attrition of solid catalyst in the reactor, pump, and circulation lines accumulate on filter 10, eventually plugging the filter.

Since the surface area, and hence catalytic activity, increases with decreasing catalyst particle size, it has been desirable to utilize relatively small catalyst particles. Unfortunately, small catalyst particles, i.e. those smaller than 1µm in mean size, tend to plug filter elements, which is fatal to continuous operation. The most efficient olefin epoxidation catalysts are very small, *i.e*. 0.2µm particles of titanium silicalite. These small particles are exceptionally difficult to remove from the product stream without blockage of filters. Reactors employing such catalysts typically run for not more than about 8 hours continuously for this reason. Catalyst manufacturers have proposed to produce catalyst agglomerates through use of a binder to bind the highly active small catalyst particles together into catalyst particles of much greater size, as disclosed in U.S. Patents 5,500,199 and 6,106,803. While such larger particles are readily filterable, and provide less back pressure when employed in fixed bed processes, circulation of catalyst-containing slurry produces considerable catalyst attrition. Catalyst attrition generates fines of both catalyst and binder which can then rapidly plug filter elements.

It would be desirable to maintain the benefits of excellent mixing and mass transfer provided by a draught tube reactor while minimizing both catalyst attrition as well as plugging of filters by catalyst-derived fines. It would be further desirable to provide an olefin epoxidation process employing a reactor system which allows a wider selection of catalysts, including agglomerates for which attrition may ordinarily be a problem.

### SUMMARY OF THE INVENTION

It has now been surprisingly discovered that catalyst attrition and filter blockage in systems employing draught tube reactors containing a solid, particulate catalyst slurried in a liquid can be minimized by employing vertically oriented filter elements located within the reactor.

### BRIEF DESCRIPTION OF THE DRAWINGS

FIGURE 1 illustrates a conventional draught tube reactor containing a slurried solid catalyst and external filtration system;
FIGURE 2 illustrates one embodiment of a draught tube reactor of the present invention employing manifolded filter candles and heat transfer tubes in the reactor annulus;
FIGURE 3 illustrates one embodiment of a draught tube reactor employing plate-type filter elements and heat transfer fins integral with the reactor wall;
FIGURES 4a-4c are top views of further embodiments of the present invention employing a variety of filter elements and heat transfer elements;
FIGURES 5a and 5b illustrate one embodiment of the present invention wherein an outer, concentric, tubular filter medium spaced apart from the reactor draught tube defines a filtrate collecting space between the filter and the draught tube;
FIGURE 6 is a top view of a further embodiment of the present invention where an inner, concentric tubular filter element spaced apart from the inner reactor wall defines a filtrate collecting space between the filter and the reactor wall; and
FIGURE 7 illustrates a further embodiment of a draught tube reactor where the vertically oriented filter is located in the bottom reactor cover.

### DETAILED DESCRIPTION OF THE PREFERRED EMBODIMENT(S)

The basic configuration of the draught tube reactors of the present invention follow that disclosed in United States Patent No. 6,464,384. The reactors are generally tubular reactors operated vertically, and contain, with the outer reactor wall, a central "draught" tube in which reactants entering the reactor are intimately mixed. The reactants may be a liquid, solid, or gaseous form. In the direct oxidation of propylene to propylene oxide, for example, the inlet streams may include liquid medium, *i.e.* an oxygenated solvent such as methanol, one or more gas inlets to provide propylene, hydrogen, oxygen, and optionally an inert gas such as methane, propane, nitrogen, etc., and other feed streams such as catalyst slurry, bicarbonate solution, etc. At the pressures involved, propylene may constitute a liquid stream. These reactant streams are introduced proximate to an end of the draught tube or within it. Mixing may be accomplished by upward flow of gases, but most preferably, as disclosed in the 6,464,384 patent, is promoted by one or more impellers. The impellers may be driven by any suitable means, preferably by a vertical shaft located within the draught tube, and preferably driven in turn by a motor located external from the reactor.

Vertically extending baffles are preferably located between the impellers, and optionally above and below the topmost and bottommost impellers as well. The baffles may be used to prevent a swirling flow in the draught tube which might cause segregation of reaction mixture components, *i.e*. catalyst particles and bubbles of gas. The turbulence created by the impellers and baffles in the draught tube encourage very thorough mixing of the various reactive components.

Upon reaching the end of the draught tube, the reaction slurry flows in a countercurrent direction through the annular space between the reactor walls or any liner disposed therein and the draught tube, whereupon a portion of all of the slurry reenters the draught tube and is recirculated. One or more product takeoff lines are ordinarily positioned at the top or bottom of the reactor. Slurry in conventional reactors flows through the product takeoff outlet and is filtered, the substantially catalyst-free filtrate being appropriately treated, *i.e.* by multiple fractionation columns, to separate product from unreacted starting materials and byproducts. The byproducts may be purified for sale, reworked by further reactions to produce other saleable products, or burned for their fuel value, while the unreacted starting materials are generally recycled to the reactor.

The present invention is an improvement over the conventional draft tube reactor described above by virtue of an internal filtration system designed to remove catalyst particles from the product stream prior to the exit of this stream from the reactor. As a result, no catalyst-entrained slurry need be pumped to a separate filtration unit. Attrition is lowered, and heat loss associated with ancillary equipment is decreased as well. The reactor configuration of the present invention enjoys the benefit of lower capital cost as well.

The *in situ* filters of the present invention may take numerous forms depending upon the particular reactor configuration, its construction, heat transfer requirements, etc., but in all forms, involve substantially vertically oriented filters arranged such that one portion of the filter(s) contacts the recirculating slurry in the reactor (the "filter side"), while the filtrate side of the filter(s) is substantially isolated from the slurry such that a liquid product stream substantially free of catalyst, or containing only catalyst and/or binder fines is obtained. The product stream may advantageously be directly routed to product separation and purification stages without the necessity to remove large portions of catalyst for recycle. Any fines in the substantially catalyst-free outlet stream may be separated by relatively small but highly efficient filters, for example those capable of being efficiently backwashed to restore flow capacity, may be separated by centrifugation, but preferably are eventually separated out of flash bottoms or distillation bottoms. The total amount of fines will be low, and may be in a form which is not suitable for immediate reuse, although treatment to extract metal values may be advantageous. When the pore size of the vertically oriented filter media is relatively large, attrited but still useable catalyst particles may pass through the filter, and the recyclable catalyst particles separated from the very small particle size fines, washed, and recycled to the reactor.

Thus, the present invention is directed to an olefin epoxidation process employing a draught tube reactor wherein the product outlet stream is filtered inside of the reactor by at least one substantially vertically oriented filter medium, thus providing a substantially catalyst-free product stream. The subject invention is further directed to providing increased heat exchange capacity in conjunction with the *in situ* filtration.

The filter media useful in the present reactor may be any which are suitable for the slurry environment to which the filter side of the filter will be exposed. The "filter side" is defined as that portion of the filter in contact with the medium to be filtered, *i.e.* the reaction slurry, while the term "filtrate side" and like terms may be used to identify the side of the filter remote from the reaction slurry and from which the product stream "filtrate" is derived.

The filter medium may, for example, be in the form of a perforated plate or multiplicity thereof, metal mesh screens, sintered ceramic material, sintered metal, *i.e*. porous sintered stainless steel, or when the configuration allows, microporous polymer membranes. If the latter are used, it is preferable that they be overlaid by a metal mesh screen or perforated metal layer to protect the polymer film from abrasion by particulates, *i.e.* catalyst particles. The filter medium may be self supporting or may be supported by a suitable supporting framework, *i.e.* a relatively coarsely perforated metal plate.

The pore size of the filter medium is selected so as to provide for the desired degree of filtration, which is partially dependent on both the primary particle size of the catalyst particles as well as the particle size and particle size distribution of the fines expected. An independent system for fines removal can be employed whereby a portion of the reactor slurry is withdrawn and passed through a filter which collects the catalyst particles and allows the liquid to pass through the filter. When the filter is full, the catalyst is removed for regeneration of its catalytic activity, disposal, or fines segregation. Fines segregation can be accomplished by a number of conventional means such as screening and wet classification. If the catalyst is regenerated or segregated, it can be slurried with the reaction solvent and returned to the reactor.

The term "substantially free of catalyst" and similar terms means that the product stream will contain, on average, less than 1 percent by weight of the weight percentage of catalyst in the reactor slurry, more preferably less than 0.1 weight percent, yet more preferably less than 0.05 weight percent, and most preferably about 0.01 weight percent or less. It is a principle aim of the present invention to provide an *in situ*-filtered product stream containing no or such a small amount of catalyst fines that continuous operation may be maintained over extensive periods of time.

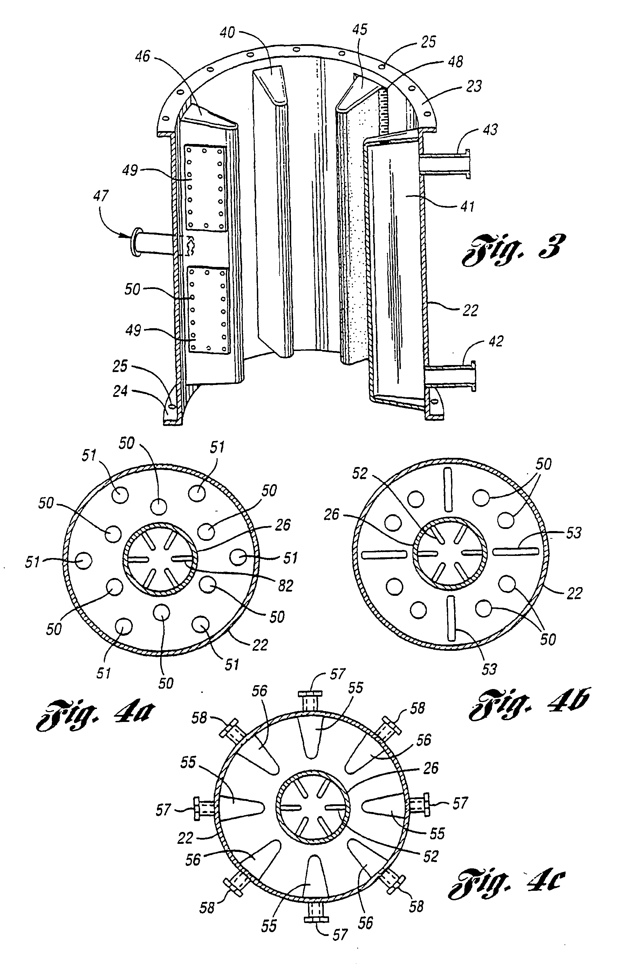

In one configuration of the reactor of the present invention, as shown in Figure 2, the filter media consist of a series of vertically oriented tubes or plates, preferably of sintered metal, which is the preferred filter medium, located in the annulus between the draught tube and the reactor vessel wall. In Figure 2, a cutaway view of a reactor is shown from an angle above, with the top and bottom of the reactor removed. The reactor 21 is comprised of reactor vessel wall 22, suitably dimensioned to withstand the internal pressure, and terminated in flanges 23 and 24 equipped with bolt holes 25 to attach the top and bottom of the reactor shell. Preferably centrally located within the reactor is draught tube 26 which will ordinarily house at least two impellers and vertical baffles, not shown here. Within the annular space 27 between reactor wall 22 and draught tube 26 are located vertical filter candles 28 and heat exchange tubes 29. The heat exchange tubes 29 communicate with bottom manifold 30 and top manifold 31. A heat exchange fluid, preferably water, enters and exits the respective heat exchange manifolds through passages 34 and 35. The filter candles are hollow, as shown by cutaway in the leftmost candle in the figure, the hollow interior 36 communicating with product stream manifold 37, exiting from the product stream manifold through product stream outlet 38. The hollow interior of the filter candles and any manifold associated therewith comprises a "filtrate collecting space" as that term is defined herein.

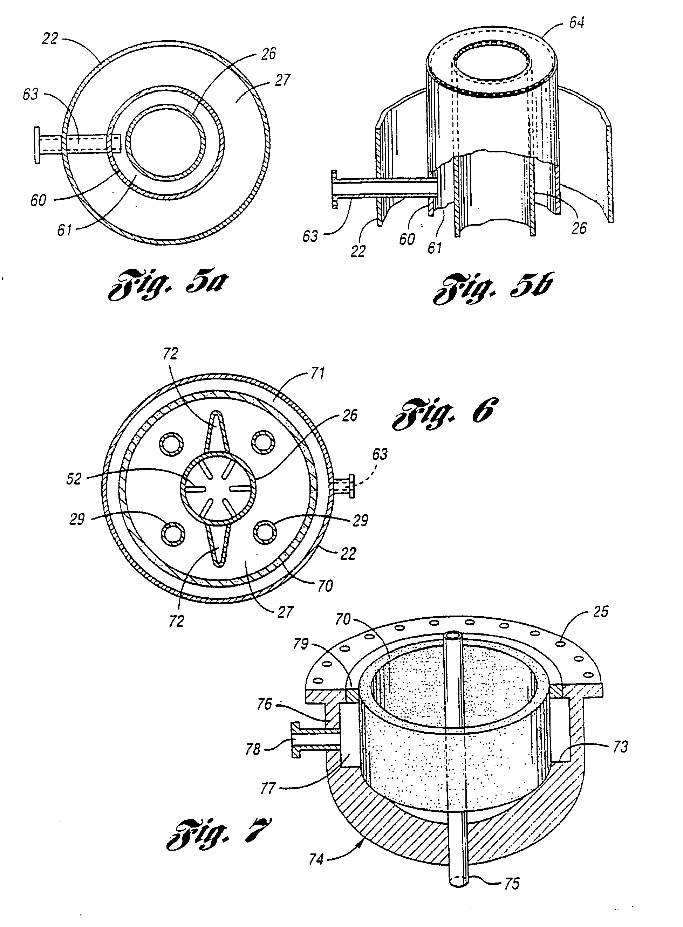

In Figure 3 is shown an alternative reactor design in cutaway, in this case omitting the draught tube for increased clarity. In this case, both the filter elements as well as the cooling elements are shown as plate-type elements connected to the reactor walls. Cooling plates 40 and 41 are hollow assemblies, each having an inlet 42 and outlet 43 for cooling water through the reactor wall. The rightmost cooling plate 41 is shown in cutaway fashion, illustrating its hollow interior.

Filter elements 45 and 46 are similarly attached to the reactor walls, and product stream flows out of the reactor from the filtrate collecting space, located on the filtrate side of the filter elements, through the reactor wall, as product stream outlet 47. Filter element 45 is shown as a sintered metal filter welded to a metal portion extending from the reactor wall along weld line 48. Filter element 46 is shown as a hollow plate type device where filter elements 49 are mounted to the element, for example by bolts 50.

In Figures 4a - 4c are shown top views of draught tube reactors having tube type filter elements and heat exchangers (4a); tube type filter elements and non-integral plate-type exchangers (4b), and integral filter plates and integral heat exchanger plates (integral with the reactor wall) (4c) as shown in Figure 3.

In Figure 4a, elements 50 are filter candles while elements 51 are heat exchanger tubes. The draught tube 26 is shown with vertical baffles 52, which are preferred. The connecting manifolds are not shown for clarity. In Figure 4b, the plate type heat exchangers 53 are used, preferably connected to manifolds as shown for the tube type heat exchangers in Figure 3. Filter candles 50 are used in this embodiment. In Figure 4c, the filter media 55 and heat exchangers 56 are both plate type, and mounted, welded, or otherwise attached to the reactor wall 22. The filter elements 55 have product stream outlets 57 communicating with the filtrate collecting space, while the cooling "fins" or plates have both inlets and outlets, only one of which (58) is shown. Many other configurations are, of course suitable. However, the filter media as well as the heat exchangers should be substantially vertical, i.e. to avoid a construction where solid catalyst could easily accumulate on a horizontal or sloping surface. Vertical orientation or an orientation inclined by about 30° or less from vertical, preferably 15° or less is preferred. Producing reactors with filter elements and/or heat exchanger elements with other than vertical orientation is likely to increase construction costs.

In the case of filter elements and tubular and/or non-integral plate-type heat exchangers connected to a manifold, certain advantages accrue. First, the number of exits through the walls bottom of the reactor are minimized. This is particularly important when reactions are to proceed at elevated pressure, *i*.*e*., 10 bar to 1000 bar. Second, the various manifolds and their associated components can be separately assembled, and inserted and removed from the reactor readily for cleaning, repair, filter element replacement, etc.

An alternative embodiment of the reactor is shown in Figure 5. In Figure 5a, a top view shows the draught tube 26 surrounded by a concentric filter tube 60, *i.e.* of sintered metal, leaving a filtrate collecting space 61 between filter tube 60 and draught tube 26. A product stream outlet 63 extends into the collecting space 61 and passes out through reactor wall 22 or alternatively through the top or bottom covers of the reactor. In Figure 5b, most of the reactor wall is deleted for clarity, and the filter element and draught tube 26 is shown in perspective and partial cutaway. At the top of the draught tube/filter tube, the two are welded together along weld line 64, or may be assembled with flanges and bolts, clamps, other means known to the chemical engineer or reactor vessel designer. In the reactor configuration of Figure 5, product slurry is filtered from the annular space 27 through filter medium 60 into the filtrate collecting space. The filter tube as well as the draught tube may be constructed of shorter sections which are assembled together to produce a longer draught tube/filter assembly. In the apparatus of Figure 5, integral or non-integral plate-type heat exchangers may be used, or tube-type exchangers as shown in Figure 2. Since the annular space 27 is free of obstruction, flexibility in design is facilitated. The reactor may also be jacketed for cooling of the vessel wall. Combinations of such cooling elements may also be utilized.

In Figure 6, a further embodiment is illustrated, where the vertical filter element is sealingly located within and spaced apart from the interior wall of the reactor shell, forming a filtrate collecting space between the inner wall and the tubular filter element. By terms such as "sealingly located" or "sealingly surrounded" is simply meant that the filter element is closed off at its ends or other termini such that the slurry cannot enter the filtrate collecting space without first passing through the filter. Sealing may be by welding, adhesive bonding, o-ring seals, bolted flanges with or without gasketing material, etc.

In Figure 6, the filter element 70 lies within the reactor wall 22, with a filtrate collecting space 71 between the reactor wall 22 and filter element 70. A product stream outlet 63 passes through reactor wall 22 into filtrate collecting space 71. The draught tube 26 is shown with internal baffles 52, plate-type heat exchangers 72 extending outwardly from the draught tube 26, and tube-type heat exchangers 29 in the annular space 27. These would be preferably connected to a suitable manifold. Various combinations of the embodiments shown herein may be used.

It is also within the spirit of the invention to employ a tubular filter medium as shown in Figure 6, but to locate all or a portion of the filter element above or below the draught tube, extending the length of the reactor appropriately. Such a position is still considered as being located within the "annular space" as that term is used herein, as it is within the reactor wall or shell, and outside an imaginary extension of the draught tube. Such a configuration is shown in Figure 7 where the tubular filter medium 70 rests on a land 73 in the bottom cover 74 of the reactor. A reactant inlet passage 75 is shown extending upwards to introduce reactants proximate to the end of the draught tube located in the reactor or within the draught tube. Between the tubular filter element 70 and the wall 76 of the reactor bottom cover 74 is filtrate collecting space 77, which allows filtered product to flow out of the reactor via passage 78. The reactor contents are prevented from entering the filtrate collecting space without first passing through the filter by barriers or seals 79. For example, the reactor wall may be made thicker and thus with reduced diameter at this point to accommodate an o-ring seal, or a plate may be welded or bolted to the reactor and to the filter element, etc.

The reactors may be made of any material suitable for the particular reaction envisioned. In general, the reactor internals will be of a material non-corrosive under reaction conditions, including porcelainized steel, stainless steel, tantalum-lined reactors, glass lined reactors, etc. Most preferably, the reactor internals are constructed of a corrosion resistant stainless steel such as 316 stainless steel, Hastelloy, etc.

The use of vertical filter elements allows for considerable filter area and avoidance of substantially horizontal surfaces which might otherwise allow solids, particularly catalyst solids, to settle. Moreover, the sweeping flow of catalyst-containing reactant slurry past the filter elements tends to keep them free of blockage. Thus, the reactor can be used for long campaigns of production without shutdown to clean or replace filters, etc. Periodic reverse pressuring of the reactor, *i.e.* momentarily or fluctuatingly causing the filtrate collecting cavities and product stream outlets to have a higher pressure than the reactor interior can flush fine particles from the filter. The reverse pressuring may be effected by closing product outlet stream and injecting solvent under pressure, or by lowering the reactor operating pressure intermittently, or both. In the most preferred designs, such "reverse pressuring" or "filter backwash" will not be performed or will be necessary but rarely.

The reactor of the present invention is particularly useful where streams of various reactants, preferably also including gaseous reactants, must be intimately mixed and contacted with solid, heterogeneous catalyst. The reactor is particularly useful for "direct" olefin epoxidation reactions, but its use is not limited thereto.

In the case of propylene epoxidation, for example, the epoxidation catalyst may be palladium treated titanium silicalite crystals of large size or may be relatively large agglomerates of titanium silicalite crystals such as those disclosed in U.S. Patents 5,500,199 and 6,106,803. The reactant feed streams may comprise propylene, hydrogen, oxygen, liquid phase, i.e. methanol, inert gas such as a volatile hydrocarbon or nitrogen, carbon dioxide, argon, etc. The product stream will ordinarily comprise unreacted gases which can be separated and recycled, solvent which is ordinarily recycled, and propylene oxide and "propylene oxide equivalents," i.e. ring opened and various condensation products. The propylene oxide product is separated by methods well known to those skilled in hydrocarbon processing, preferably by a series of fractional distillations.

Since the reactor generally operates under considerable pressure, pumps are not necessary to remove product stream filtrate from the filtrate collecting space, manifold, etc. Rather, flow is maintained due to the internal reaction pressure. A suitable back pressure regulator may be required to adjust product stream flow to the desired level. Increasing product stream flow decreases the amount of reactor contents being recirculated, and vice versa.

## Claims

1. A process for the epoxidation of an olefin in a slurry of solid catalyst in oxygenated solvent, the process comprising
epoxidizing said olefin in a draught tube reactor wherein reactants are introduced into a central draught tube optionally containing one or more mixing impellers, mixed, and circulated countercurrently through an annular space between the draught tube and an interior wall of the reactor in the form of a slurry containing solid catalyst particles, the reactor comprising:
at least one substantially vertically oriented filter medium positioned in an annular space outside the draught tube and within the interior wall of the reactor, a filter side of said filter medium in contact with said slurry, and a filtrate side of said filter medium isolated from said slurry, such that a substantially catalyst particle-free product stream filtrate collects on the filtrate side of said filter medium in a filtrate collecting space, and
a passage communicating with said filtrate collecting space to provide a product stream outlet from the reactor,
and separating olefin oxide from the product stream thereof.

2. The process of claim 1, wherein said solid catalyst is a titanium silicalite catalyst.

3. The process of claim 2, wherein hydrogen peroxide is fed to said reactor.

4. The process of claim 1, wherein said solid catalyst is a noble metal-treated titanium silicalite catalyst, and hydrogen gas and oxygen gas are fed to said reactor.

5. The process of claim 1, wherein said oxygenated solvent comprises methanol and said olefin is propylene, said process further comprising removing a product stream comprising methanol and propylene oxide from said reactor, separating propylene oxide from said product stream, and recycling methanol into said reactor.

6. The process of claim 2, wherein said oxygenated solvent comprises methanol and said olefin is propylene, said process further comprising removing a product stream comprising methanol and propylene oxide from said reactor, separating propylene oxide from said product stream, and recycling methanol into said reactor.

7. The process of claim 3, wherein said oxygenated solvent comprises methanol and said olefin is propylene, said process further comprising removing a product stream comprising methanol and propylene oxide from said reactor, separating propylene oxide from said product stream, and recycling methanol into said reactor.

8. The process of claim 4, wherein said oxygenated solvent comprises methanol and said olefin is propylene, said process further comprising removing a product stream comprising methanol and propylene oxide from said reactor, separating propylene oxide from said product stream, and recycling methanol into said reactor.

## Patentansprüche

1. Verfahren zur Epoxidierung eines Olefins in einer Aufschlämmung von festem Katalysator in oxygeniertem Lösungsmittel, wobei das Verfahren umfasst:
Epoxidieren des Olefins in einem Zugrohrreaktor, in den Reaktanten in ein zentrales Zugrohr, das gegebenenfalls einen oder mehrere Mischimpeller enthält, eingebracht, gemischt und gegenläufig durch einen ringförmigen Raum zwischen dem Zugrohr und einer Innenwand des Reaktors in Form einer Aufschlämmung, die feste Katalysatorteilchen enthält, zirkuliert werden, wobei der Reaktor umfasst:
mindestens ein im Wesentlichen vertikal orientiertes Filtermedium, das in einem ringförmigen Raum außerhalb des Zugrohres und innerhalb der Innenwand des Reaktors angeordnet ist, eine Filterseite des Filtermediums in Kontakt mit der Aufschlämmung, und eine von der Aufschlämmung isolierte Filtratseite des Filtermediums, derart, dass sich ein im Wesentlichen Katalysatorteilchen-freies Produktstrom-Filtrat auf der Filtratseite des Filtermediums in einem Filtratsammelraum sammelt, und
einen Durchgang, der mit dem Filtratsammelraum kommuniziert, um einen Produktstrom-Auslass aus dem Reaktor bereitzustellen, und Abtrennen des Olefinoxides von dem Produktstrom.

2. Verfahren nach Anspruch 1, wobei der feste Katalysator Titansilicat-Katalysator ist.

3. Verfahren nach Anspruch 2, wobei dem Reaktor Wasserstoffperoxid zugeführt wird.

4. Verfahren nach Anspruch 1, wobei der feste Katalysator ein Edelmetall-behandelter Titansilicat-Katalysator ist und dem Reaktor Wasserstoffgas und Sauerstoffgas zugeführt werden.

5. Verfahren nach Anspruch 1, wobei das oxygenierte Lösungsmittel Methanol umfasst und das Olefin Propylen ist, wobei das Verfahren weiterhin das Entfernen eines Produktstroms, der Methanol und Propylenoxid umfasst, aus dem Reaktor, das Abtrennen von Propylenoxid von dem Produktstrom und das Recycling von Methanol in den Reaktor umfasst.

6. Verfahren nach Anspruch 2, wobei das oxygenierte Lösungsmittel Methanol umfasst und das Olefin Propylen ist, wobei das Verfahren weiterhin das Entfernen eines Produktstroms, der Methanol und Propylenoxid umfasst, aus dem Reaktor, das Abtrennen von Propylenoxid aus dem Produktstrom und das Recycling von Methanol in den Reaktor umfasst.

7. Verfahren nach Anspruch 3, wobei das oxygenierte Lösungsmittel Methanol umfasst und das Olefin Propylen ist, wobei das Verfahren weiterhin das Entfernen eines Produktstroms, der Methanol und Propylenoxid umfasst, aus dem Reaktor, das Abtrennen von Propylenoxid aus dem Produktstrom und das Recycling von Methanol in den Reaktor umfasst.

8. Verfahren nach Anspruch 4, wobei das oxygenierte Lösungsmittel Methanol umfasst und das Olefin Propylen ist, wobei das Verfahren weiterhin das Entfernen eines Produktstroms, der Methanol und Propylenoxid umfasst, aus dem Reaktor, das Abtrennen von Propylenoxid aus dem Produktstrom und das Recycling von Methanol in den Reaktor umfasst.

## Revendications

1. Procédé d'époxydation d'une oléfine dans une boue de catalyseur solide dans un solvant oxygéné, ledit procédé comprenant :
l'époxydation de ladite oléfine dans un réacteur à tube d'aspiration dans lequel des agents réactifs sont introduits dans un tube d'aspiration central contenant éventuellement une ou plusieurs pales de mélange, mélangés et circulés à contre-courant à travers un espace annulaire entre le tube d'aspiration et une paroi intérieure du réacteur sous la forme d'une boue contenant des particules de catalyseur solide, ledit réacteur comprenant :
au moins un moyen de filtre orienté sensiblement verticalement positionné dans un espace annulaire à l'extérieur du tube d'aspiration et à l'intérieur de la paroi intérieure du réacteur, un côté de filtre dudit moyen de filtre étant en contact avec ladite boue, et un côté de filtration dudit moyen de filtre étant isolé de ladite boue, de telle sorte qu'un filtrat de flux de produit sensiblement exempt de particules catalyseuses soit recueilli sur le côté du filtrat dudit moyen de filtre dans un espace de collecte de filtrat ; et
un passage communiquant avec ledit espace de collecte de filtrat pour fournir une sortie de flux de produit à partir du réacteur ; et
la séparation dudit oxyde d'oléfine du flux de produit de celui-ci.

2. Procédé selon la revendication 1, dans lequel ledit catalyseur solide est un catalyseur de silicalite de titane.

3. Procédé selon la revendication 2, dans lequel du peroxyde d'hydrogène est alimenté dans ledit réacteur.

4. Procédé selon la revendication 1, dans lequel ledit catalyseur solide est un catalyseur de silicalite de titane à traitement métallique noble, et de l'hydrogène ou de l'oxygène sous forme de gaz sont alimentés dans ledit réacteur.

5. Procédé selon la revendication 1, dans lequel ledit solvant oxygéné comprend du méthanol et ladite oléfine est du propylène, ledit procédé comprenant en outre le retrait d'un flux de produit comprenant du méthanol et de l'oxyde de propylène provenant dudit réacteur, la séparation de l'oxyde de propylène dudit flux de produit, et le recyclage du méthanol dans ledit réacteur.

6. Procédé selon la revendication 2, dans lequel ledit solvant oxygéné comprend du méthanol et ladite oléfine est du propylène, ledit procédé comprenant en outre le retrait d'un flux de produit comprenant du méthanol et de l'oxyde de propylène provenant dudit réacteur, la séparation de l'oxyde de propylène dudit flux de produit, et le recyclage du méthanol dans ledit réacteur.

7. Procédé selon la revendication 3, dans lequel ledit solvant oxygéné comprend du méthanol et ladite oléfine est du propylène, ledit procédé comprenant en outre le retrait d'un flux de produit comprenant du méthanol et de l'oxyde de propylène provenant dudit réacteur, la séparation de l'oxyde de propylène dudit flux de produit, et le recyclage du méthanol dans ledit réacteur.

8. Procédé selon la revendication 4, dans lequel ledit solvant oxygéné comprend du méthanol et ladite oléfine est du propylène, ledit procédé comprenant en outre le retrait d'un flux de produit comprenant du méthanol et de l'oxyde de propylène provenant dudit réacteur, la séparation de l'oxyde de propylène dudit flux de produit, et le recyclage du méthanol dans ledit réacteur.
